# EUROPEAN PATENT SPECIFICATION

(11) **EP 1 480 320 B1**
(45) Date of publication and mention of the grant of the patent: **30.07.2008**
(21) Application number: 03743017.0
(22) Date of filing: 31.01.2003
(51) Int. Cl.: H02K 49/02, H02K 49/10

(54) **EDDY CURRENT SPEED REDUCER**
WIRBELSTROM-GESCHWINDIGKEITSREDUZIERER
REDUCTEUR DE VITESSE A COURANTS DE FOUCAULT

(30) Priority: 28.02.2002 JP 2002054347; 15.05.2002 JP 2002140340
(43) Date of publication of application: 24.11.2004
(73) Proprietor: SUMITOMO METAL INDUSTRIES, LTD., Osaka-shi, Osaka 541-0041 (JP)
(72) Inventor: IMANISHI,Kenji c/o Sumitomo Metal Industries, Ltd., Osaka-shi, Osaka 541-0041 (JP); NOGUCHI, Yasutaka Sumitomo Metal Industries, Ltd., Osaka-shi, Osaka 541-0041 (JP); HIRAMATSU,Shinichiro Sumitomo Metal Industries,Ltd, Osaka-shi,Osaka 541-0041 (JP); TANI, Yasunori c/o Sumitomo Metal Industries, Ltd., Osaka-shi, Osaka 541-0041 (JP); YAMAGUCHI, Hiroyuki Sumitomo Metal Industries,Ltd., Osaka-shi, Osaka 541-0041 (JP); TASAKA,Masahito c/o Sumitomo Metal Industries, Ltd, Osaka-shi, Osaka 541-0041 (JP); SAITO, Akira c/o Sumitomo Metal Industries, Ltd., Osaka-shi, Osaka 541-0041 (JP); MIYAHARA,Mitsuo c/o Sumitomo Metal Industries, Ltd, Osaka-shi, Osaka 541-0041 (JP)
(74) Representative: Dallmeyer, Georg
(86) International application number: PCT/JP2003/000996
(87) International publication number: WO 2003/073592

(56) References cited:
- JP-A- 6 078 519
- JP-A- 2000 358 353
- JP-A- 2001 028 876
- JP-A- 2002 291 224

## Description

### TECHNICAL FIELD

The present invention relates to an eddy current braking apparatus which assists a main brake installed in a vehicle or the like, and relates specifically to an eddy current braking apparatus using a disk type brake member.

### BACKGROUND ART

Braking apparatus for vehicles such as trucks and buses include, in addition to primary braking apparatus such as foot brakes and auxiliary braking apparatus such as exhaust brakes, eddy current braking apparatus which reduce speed in a stable manner, and also prevent the foot brake from burning out, in such situations as when descending long slopes.

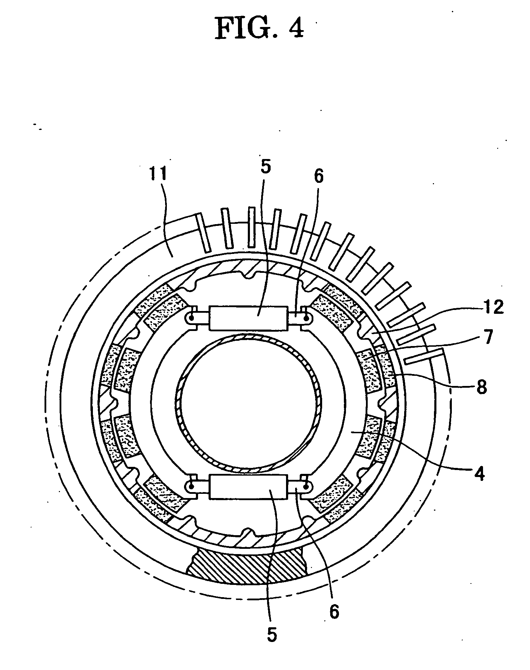

FIG. 4 is a diagram showing the structure of an eddy current braking apparatus as proposed in Japanese Examined Patent Publication No. Hei. 6-81486, which shows an example of a method in which the polar surfaces (magnetic pole surfaces) of permanent magnets are in an opposed relationship to a rotary drum type braking member. The present specification may describe this method, in which the polar surfaces (magnetic pole surfaces) of the permanent magnets oppose the brake member, as simply the "opposing magnet pole surface method".

In the example shown in FIG. 4, inside the rotary drum 11 are provided a support ring 4 which holds permanent magnets 7 in a circle, and a drive mechanism 5 for moving the support ring 4 towards the inner peripheral surface of the rotary drum 11. Moving the support ring 4 towards the rotary drum 11 causes braking torque to be produced in the rotary drum.

In the specific structure of this braking apparatus, a nonmagnetic ring 12 is disposed inside of the rotary drum 11, and a plurality of ferromagnetic members 8 are arranged around the nonmagnetic ring 12 in the circumferential direction. Inside the nonmagnetic ring 12, the semicircular support ring 4 is guidably supported so as to be movable in the radial direction. The permanent magnets 7 are coupled to the support ring 4 so as to oppose the ferromagnetic members 8, and the ends of the arc shaped support ring 4 are connected by piston rods 6 attached to a pair of fluid pressure actuators 5. When the pair of upper and lower actuators 5 are actuated, the permanent magnets 7 move towards the ferromagnetic members 8, and magnetic lines of force are exerted on the inner peripheral surface of the rotary drum 11, generating braking torque.

However, the eddy current braking apparatus shown in FIG. 4 entails many problems, categorized as problems caused by the use of a rotary drum, and problems caused by employing the "opposing magnet pole surface method". First, a serious problem caused by the use of a rotary drum is that because the stator (guide sleeve) which houses the permanent magnets and the like is covered by the inner peripheral surface of the rotary drum, heat dissipation is poor, and the heat generated during actuation causes marked expansion. Details on the problems caused by this factor are described below.

On the other hand, problems caused by employing the "opposing magnet pole surface method" can be attributed to the moving of the support ring which arranges the permanent magnets closer to the inner peripheral surface of the rotary drum using the fluid pressure actuators. In other words, in the proposed braking apparatus, the structure is such that the permanent magnets cannot be disposed on part of the inner circumference of the rotary drum, which makes it difficult to secure the necessary braking force. Moreover, the length of the magnetic circuit formed by the permanent magnets may lengthen, and the magnetic circuit may be interrupted at a part of the inner peripheral surface, which reduce magnetic efficiency. Furthermore, because this structure does not allow the permanent magnets to be disposed perpendicularly relative to the rotary drum and in an evenly spaced manner, a large stroke must be used to move the permanent magnets back to a non-braking position.

As described above, an eddy current braking apparatus using a rotary drum has problems with heat dissipation during braking, inherent in its structure. Specifically, heat generated in the rotary drum during braking causes expansion of the outer peripheral section. In order to absorb this expansion, a system of drum support that is complex in design is required, which complicates the drum sturucture. In addition, because the rotational weight is concentrated towards the outside in the radial direction, it is difficult to adjust the rotational balance, and the excessive stress caused by centrifugal force causes such problems as a reduction in durability and a tendency for dimensional variation.

Incidentally, by adjusting the distance between the permanent magnets and the rotary drum inner peripheral surface, it is possible to adjust the braking torque, but to adjust the air gap it is necessary to enlarge and reduce the inside diameter of the rotary drum. This means that the ability to use the components of the rotary drum as common parts is lost.

Consequently, recently, instead of drum type apparatus which use a rotary drum, a great number of disk type eddy current braking apparatus have been proposed (for example Japanese Unexamined Patent Publication No. 2000-35835, Japanese Unexamined Patent Publication No. 2001-28876).

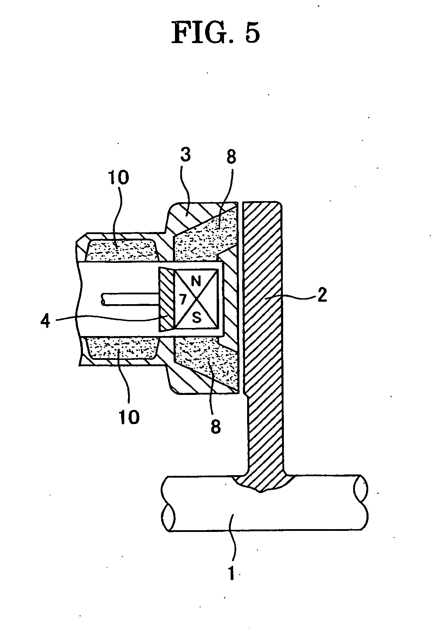

FIG. 5 shows an embodiment of a disk type eddy current braking apparatus proposed in Japanese Unexamined Patent Publication No. 2001-28876. As shown in the figure, in this braking apparatus, permanent magnets 7 are disposed on the side face of a magnet support ring 4, so that the magnetic pole direction of the permanent magnets 7 is aligned with the radial direction. The permanent magnets 7 are disposed so that the polarity of the outer surfaces of the permanent magnets 7 alternates in the circumferential direction. The base ends of a pair of magnetic pole members 8 oppose the outer surface and inner surface of each permanent magnet 7, and the ends of the magnetic pole members 8 are bent diagonally so that the side faces oppose the brake disk 2. Eddy current, caused by the magnetic field from the permanent magnets 7 is generated in the brake disk 2, producing braking force. On the other hand, in a non-braking state, in this structure the permanent magnets 7 are retracted, producing a shorted magnetic circuit between shorting cylinders 10 which sandwich the permanent magnets 7, and thus no longer exerting a magnetic field on the brake disk 2.

However, in the eddy current braking apparatus shown in FIG. 5, because the magnetic circuit is oblique during braking, the magnetic circuit lengthens, which increases the likelihood of a short in the magnetism. This results in deterioration in the magnetic efficiency. In addition, a predetermined gap is required between the ferromagnetic members 8 which oppose both pole surfaces of the permanent magnets 7, and as the air gap in the magnetic circuit increases, the magnet field acting on the brake disk is dispersed in the radial direction. This also results in a deterioration in magnetic efficiency.

In addition, in the eddy current braking apparatus described above, during non-braking, the permanent magnets 7 must be retracted to the position of the shorting cylinders 10, so as to be withdrawn completely away from the ferromagnetic members 8. As a result, if the dimensions of the permanent magnets are increased to obtain a large amount of braking force, the stroke required for the permanent magnets to be retracted when changing from a braking to a non-braking state (referred to simply as the "switching stroke" below) must be larger. As a result, the braking apparatus itself must be larger, and a greater length of time is required to switch braking states.

In accordance with the above circumstances, it is an object of the present invention to provide an eddy current braking apparatus which while simple in structure has excellent braking efficiency.

Furthermore, another object is to provide an eddy current braking apparatus which has a small switching stroke and is capable of rapid switching.

### DISCLOSURE OF INVENTION

In order to achieve the above objects, there is provided an eddy current braking apparatus according to the present invention as defined in the independent claim 1. Further embodiments of the invention are claimed in dependent claims 2-8.

As described above, because with this system the permanent magnets oppose the brake disk and are moved towards it to generate braking torque in the disk itself, the magnetic lines of force of the permanent magnets can be applied to the brake disk with a short magnetic path length. Consequently, the magnetic resistance of the magnetic circuit is minimized, and the efficiency of braking torque generation is improved. As a result of the improved braking efficiency, comparatively small permanent magnets can be used, which allows a lighter, more compact and lower cost apparatus.

Preferably, the present invention further comprises a guide sleeve supported by a nonrotatable structural section, which receives the support ring and is disposed facing the brake disk. In the guide sleeve, it is possible to provide ferromagnetic members positioned facing the brake disk. Alternatively, the whole including the end face of the guide sleeve opposed to the permanent magnets is constructed of nonmagnetic material.

As a result of varied investigation into both drum type and disk type braking apparatus, the inventors made the following findings (a) to (c) below regarding a lightweight and compact eddy current braking apparatus:
(a) With a disk type apparatus, a structure can be used which has the guide sleeve (stator) exposed to the outside of the disk which generates the heat, and this allows excellent heat dissipation. Accordingly, this has an advantage in that a reduction in braking force due to a rise in the magnet temperature within the guide sleeve tends not to occur. Furthermore, because cooling fins are attached to a flat disk, the configuration design is also simple.
(b) With a drum type eddy current braking apparatus, if the drum reaches a high temperature during braking, with a drum type apparatus the drum will expand in the radial direction, increasing the distance between the permanent magnets or ferromagnetic members (pole pieces) and the drum. In other words, the air gap enlarges and as a result braking force is reduced. On the other hand, with a disk type eddy current braking apparatus, there is no variation in the air gap even if the disk expands in the radial direction, and such an eddy current braking apparatus therefore has excellent fade characteristics (the phenomenon whereby braking force reduces along with braking time). Furthermore, in order to adjust the braking force by increasing or decreasing the initial air gap, in a drum type apparatus it is necessary to machine (enlarge the internal diameter to increase the air gap) or remake the drum. On the other hand, in a disk type apparatus, it is possible to increase or decrease the air gap simply by adjusting the position of the disk in the rotary shaft direction, and therefore the braking force can be adjusted easily while leaving most components unchanged.
(c) Disks are durable (have burst resistance), inspecting and repairing the heating surface is easy, and ease of maintenance is also excellent. In other words, if the need to repair a disk arises due to fatigue or the like, it is possible to reuse the disk after simple maintenance, for example facing of the disk surface, giving excellent recyclability.

Therefore, a disk type structure is used for the eddy current braking apparatus of the present invention. Accordingly, the apparatus of the present invention has excellent heat dissipation, easy braking torque adjustment, and excellent maintainability and recyclability.

Furthermore, the present invention applies the "opposing magnet pole surface method" to a disk type eddy current braking apparatus. As a result the apparatus of the present invention enables the magnetic lines of force of the permanent magnets to be applied directly to the brake disk with a short magnetic path length, and therefore improves the efficiency of braking torque generation.

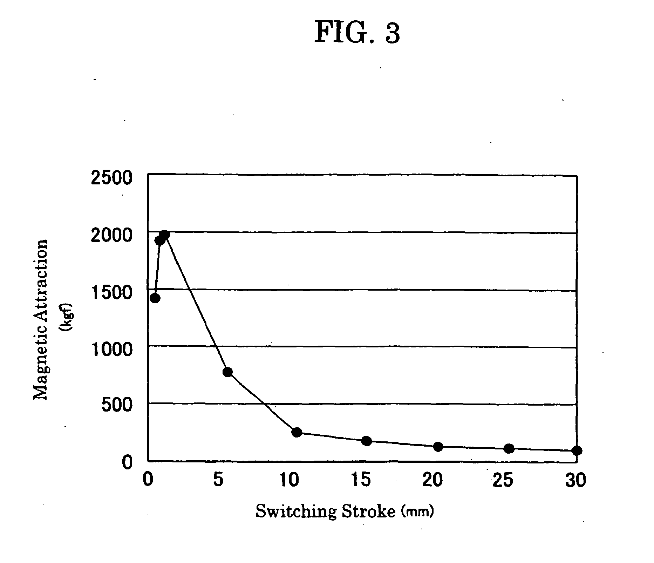

FIG. 3 is a diagram showing the relationship between the magnetic attraction of the brake disk when not rotating (braking state) and the switching stroke in the present invention. The switching stroke is calculated from the distance between the magnetic pole surface of the permanent magnets which faces the brake disk and the end face of the guide sleeve which opposes this magnetic pole surface. A load cell for measuring the attraction is provided between a joint section joining the cylinder rod end and the magnet support ring. The attraction is determined by the load cell after changing the switching stroke by inserting a shim inside of the cylinder.

As shown in FIG. 3, the magnetic attraction attenuates along the curve for the (-n)th power of the distance, from the end face of the guide sleeve. Accordingly, if a switching stroke of 10 mm to 30 mm is secured, it is possible to switch between braking and non-braking states. In other words, the attraction during braking is approximately 2000 kgf, but securing a switching stroke of 10 mm to 30 mm means that the magnetic lines of force from the permanent magnets do not reach the brake disk, and magnetic leakage is no longer a problem. That is, with the present invention, the switching stroke from a position where the permanent magnets are near to and facing the brake disk, at which braking is possible, to a non-braking position away from the brake disk, can be short. In this manner, with the eddy current braking apparatus of the present invention, the length of the switching stroke can be shortened to approximately 10 to 30 mm, and this allows the apparatus to be smaller and the switching speed to be faster.

Accordingly, the following is an example of structure of a first aspect of the present invention. The eddy current braking apparatus comprises: a brake disk connected to a rotary shaft; a guide sleeve supported by a nonrotatable section and disposed beside the brake disk; a support ring housed inside this guide sleeve and movable in the rotary shaft direction; a plurality of permanent magnets arranged opposed to the brake disk around the circumferential direction of the support ring, and so that adjacent magnet poles are opposite; and ferromagnetic members disposed on the end face of the guide sleeve so as to face the permanent magnets, in a configuration which allows the permanent magnets to move freely from a position near to and facing the brake disk, at which braking is possible, to a non-braking position away from the brake disk.

Even with eddy current braking apparatus which use permanent magnets, compared to a drum type apparatus in which the guide sleeve is covered by the drum which is the source of heat, with a disk type apparatus a structure can be used in which the guide sleeve is exposed to outside of the brake disk which is the source of heat, and therefore the heat dissipation of the guide sleeve itself is excellent. In other words, assuming the same amount of heat introduced into the guide sleeve, in a disk type apparatus the guide sleeve can contact the open air directly, effectively increasing the area available for cooling, which allows temperature rise within the guide sleeve to be controlled better than in a drum type apparatus.

In addition, by using a disk type structure for the apparatus, it is easier to attach cooling fins than in a drum type structure, and the heat dissipating performance of the brake disk, which is a source of heat generation, can be improved. Accordingly, the inventors of the present invention investigated the changes over time in the temperature of permanent magnets housed within a guide sleeve in the "opposing magnet pole surface method", being a disk type configuration.

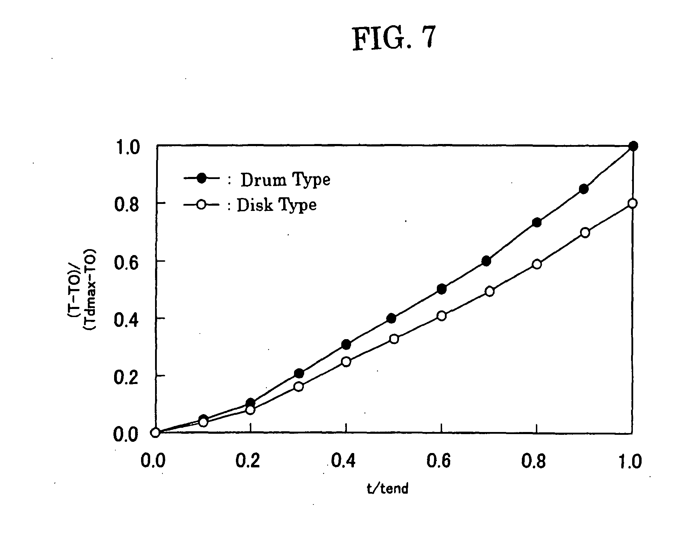

FIG. 7 is a diagram comparing the changes in temperature over time within the guide sleeve during braking in a drum type and a disk type configuration. The temperatures were measured on the surface of the permanent magnets opposing the drum or disk. The results in the diagram compare drum type and disk type eddy current braking apparatus with equivalent brake torque, that is with equivalent heat generation. As for the symbols in the diagram, "To" indicates the initial temperature of the permanent magnets, "T" indicates the internal temperature of the permanent magnets, "Tdmax" indicates the maximum temperature of the permanent magnets in the drum type apparatus, "t" indicates the braking time, and "tend" indicates the time when braking stopped.

The results in FIG. 7 show that even if there is no difference in braking torque between the apparatus, because a structure can be used for a guide sleeve in a disk type apparatus which enables effective cooling in contact with the open air, temperature rise of the permanent magnets can be controlled. As a result, it is possible to reduce the distance between the permanent magnets and the brake disk, and even if the magnetic circuit is constructed without using a ferromagnetic body (pole piece), it is possible to secure sufficient braking torque.

Accordingly, the following is an example of the structure of a second aspect of the present invention. The second embodiment of the present invention is an eddy current braking apparatus comprising: a brake disk connected to a rotary shaft; a guide sleeve supported by a nonrotatable section and disposed beside the brake disk; a support ring housed inside this guide sleeve and movable in the rotary shaft direction of the brake disk; and a plurality of permanent magnets arranged opposed to the brake disk around the circumferential direction of the support ring, and so that magnetic poles are opposite, wherein the permanent magnets are freely movable in the rotary shaft direction, and the whole of the guide sleeve including the end face which opposes the permanent magnets is constructed of nonmagnetic material.

Here, "disposed beside the brake disk" means same configuration as "disposed opposed to the brake disk", and refers to a state in which the permanent magnets face the braking surface (main surface) of the brake disk.

In the eddy current braking apparatus according to the second aspect of the present invention, because the permanent magnets are covered by the guide sleeve including the end face opposing the permanent magnets, there is no likelihood of the magnetic pole surface of the permanent magnets being damaged by foreign objects, or rusting due to moisture. In the present invention, nonmagnetic materials that may be chosen for use in the guide sleeve include aluminum, stainless steel and resin.

In addition, in the eddy current braking apparatus of the present invention, the guide sleeve may be constructed from a thin walled material. Because this allows the weight of the whole guide sleeve to be reduced, small and light-weighted apparatus can be realized. In this case, by partially reinforcing the guide sleeve, the strength of the guide sleeve can be maintained.

### BRIEF DESCRIPTION OF THE DRAWINGS

FIG. 1 is a cross-sectional view showing the structure of an eddy current braking apparatus according to a first embodiment of the present invention, in a braking state.
FIG. 2 is a cross-sectional view showing the structure of the eddy current braking apparatus according to the first embodiment, in a non-braking state.
FIG. 3 is a diagram showing the relationship between the magnetic attraction and the switching stroke during non-rotation of the brake disk (braking state).
FIG. 4 is a diagram showing the structure of an "opposing magnet pole surface method" eddy current braking apparatus using a rotary drum as proposed in a prior application.
FIG. 5 is a diagram showing an example of a disk type eddy current braking apparatus as proposed in a prior application.
FIG. 6 is a diagram showing the structure of the main parts of the first embodiment, wherein (A) is a plan view (side view) and (B) shows the cross section along the A-A' direction.
FIG. 7 is a diagram comparing the temperature rise inside the guide sleeve in a drum type and a disk type apparatus during braking.
FIG. 8 is a cross-sectional view showing an eddy current braking apparatus according to a second embodiment of the present invention.
FIG. 9 is a cross-sectional view showing an eddy current braking apparatus according to a third embodiment of the present invention.
FIG. 10 is a cross-sectional view showing an eddy current braking apparatus according to a fourth embodiment of the present invention.

1: Rotary shaft
2: Brake disk
3: Guide sleeve
3a: Reinforcing member
3b: Guide tube
4: Support ring
5: Cylinder, drive unit (actuator)
6: Piston rod
7: Permanent magnets
8: Ferromagnetic member, magnetic pole member, pole piece
10: Shorting sleeve
11: Rotary drum
12: Nonmagnetic ring

### BEST MODE FOR CARRYING OUT THE INVENTION

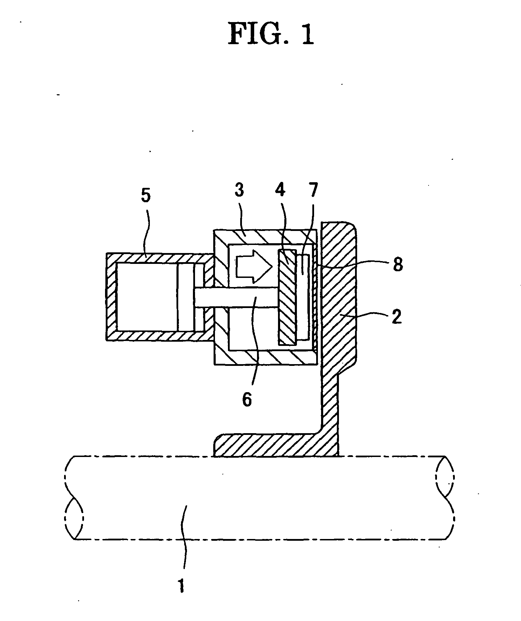

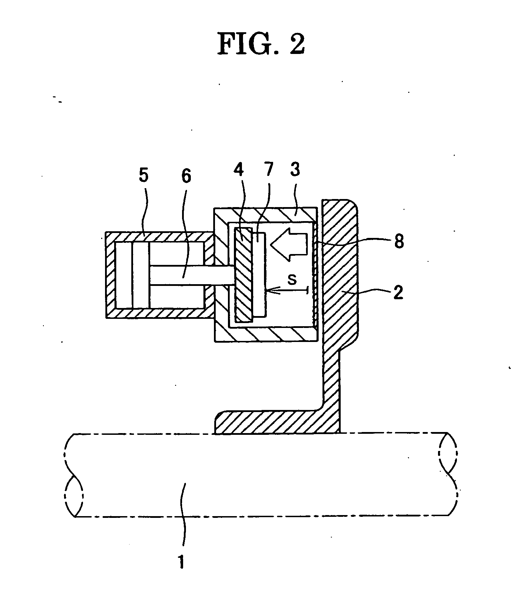

The construction of the eddy current braking apparatus of the present invention is described below with reference to the drawings. FIG. 1 and FIG. 2 show an eddy current braking apparatus according to a first embodiment of the present invention. FIG. 1 is a cross-sectional view showing the structure of the eddy current braking apparatus during braking, and FIG. 2 is a cross-sectional view showing the structure of the eddy current braking apparatus during non-braking.

The eddy current braking apparatus of the present embodiment includes a brake disk 2 attached to a rotary shaft 1, and a guide sleeve 3 made of nonmagnetic material and disposed beside the brake disk 2. The guide sleeve 3 is supported by a nonrotatable section in the vehicle or the like. A support ring 4 made of a ferromagnetic material which is movable forward and backward perpendicularly relative to the braking surface of the brake disk 2, that is movable towards and away from the brake disk 2, is housed inside the guide sleeve 3. In addition, a cylinder(s) 5 which moves the support ring 4 forward and backward are provided in the guide sleeve 3. On the other hand, pole pieces 8 made of ferromagnetic material are disposed on the end face of the guide sleeve 3 which opposes the brake disk.

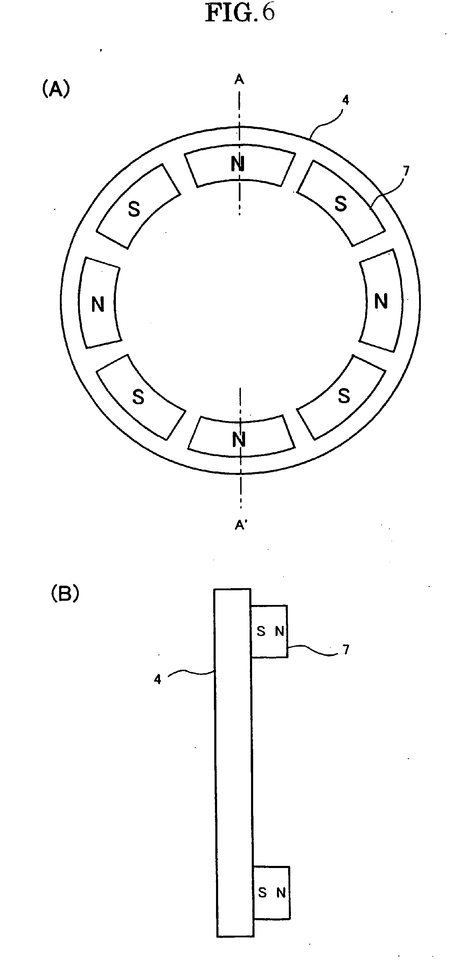

As shown in FIG. 6, a plurality of permanent magnets 7 are disposed at equal intervals around the circumferential direction of the surface of the support ring 4 which faces the brake disk 2. The magnetic pole surface of the magnets 7 opposes the braking surface of the brake disk 2. The magnetic pole surfaces of adjacent permanent magnets have opposite magnetic poles (polarity). The plurality of pole pieces 8 which oppose the magnetic pole surface of the permanent magnets 7 are disposed so as to form pairs with the permanent magnets in the circumferential direction. There is no particular thickness prescribed for the pole piece, but thinner is better, and the pole piece may be constructed with a thickness of 3 mm, for example. Specifically, attachment of the pole piece can be performed by casting the ferromagnetic member as an integrated part when molding the aluminum guide sleeve 3, for example.

The cylinder(s) 5 is disposed on the outer end wall of the guide sleeve 3, as the drive mechanism for the permanent magnets. The piston rod 6 passes from the cylinder 5 completely through the outer end wall of the guide sleeve to couple with the support ring 4. By using such a structure, the action of the cylinders 5 can cause the support ring 4 to move forward and backward in the perpendicular direction relative to the brake disk 2.

Next, the operation of the eddy current braking apparatus of the present embodiment is described. During braking, the piston 6 of the cylinder 5 moves to the right as shown by the arrow in FIG. 1, the support ring moves forward in the perpendicular direction relative to the brake disk 2, and the permanent magnets 7, opposing the bake disk 2, move towards the brake disk 2. In the structure in FIG. 1, an interval of 0.5 mm between the permanent magnets 7 and pole pieces 8 is assumed.

At this time, each permanent magnet 7 exerts magnetic lines of force on the braking surface of the brake disk 2 via the pole piece 8. When the rotating brake disk 2 intersects these magnetic lines of force, magnetic induction causes eddy current to flow in the brake disk 2, and braking torque is generated.

When switching to a non-braking state, the action of the cylinder 5 switches, moving the support ring 4 which is connected directly to the piston 6 to the left as shown by the arrow in FIG. 2. The permanent magnets 7 move away from the pole pieces 8, and the magnetic lines of force exerted by the permanent magnets 7 on the brake disk 2 weaken. With the structure of the present invention, if a switching stroke S of 10 to 30 mm is secured, then hardly any braking torque is generated in the brake disk, and magnetic leakage is not an issue.

In the examples shown in FIG. 1 and FIG. 2, a structure was used in which the support ring is moved by the cylinder, but the apparatus of the present invention is not limited to this construction, and other drive units which enable the support ring to move may also be used.

With an eddy current braking apparatus according to the first embodiment of the present invention as described above, because the "opposing magnet pole surface method" is applied to a disk type braking apparatus, magnetic lines of force can be exerted on the brake disk directly from the magnets, resulting in excellent brake efficiency. Furthermore, the simple structural design means a small number of components, and a low manufacturing cost. Moreover, because the switching stroke is small thus allowing rapid switching, a lightweight and compact apparatus can be achieved, enabling the apparatus to be installed even in a small car.

Permanent magnets are strongly temperature dependent, and their magnetism reduces once they reach a set temperature, reducing braking torque. Therefore, in order to control temperature rise of the permanent magnets, it is necessary to leave a suitable distance between the permanent magnets and the brake disk, which is the heat source. However, if the distance between the magnetic pole surface of the permanent magnets and the brake disk is increased, braking torque decreases. Therefore it is necessary to provide a ferromagnetic member (pole piece) between the two to lower the magnetic resistance on the magnetic circuit, and to perform adjustment so that there is no reduction in brake efficiency.

If the magnetic pole surface of the permanent magnets is exposed, there is likelihood that damage by foreign objects or rust caused by moisture may occur. The ferromagnetic member (pole piece), by covering the permanent magnet, eliminates damage to and rusting of the magnetic pole surface. For this reason, in the eddy current braking apparatus shown in FIG. 1 and FIG. 2, ferromagnetic members (pole pieces) are provided on the end face of the guide sleeve so as to oppose the permanent magnets.

Next, a second embodiment of the present invention is described. In this embodiment, the entire guide sleeve which houses the permanent magnets is made of nonmagnetic material. In this embodiment, even if a ferromagnetic member (pole piece) is not provided, the magnetic lines of force from the permanent magnets can be applied directly to the brake disk over a short magnetic circuit length, so the efficiency of braking torque generation can be improved.

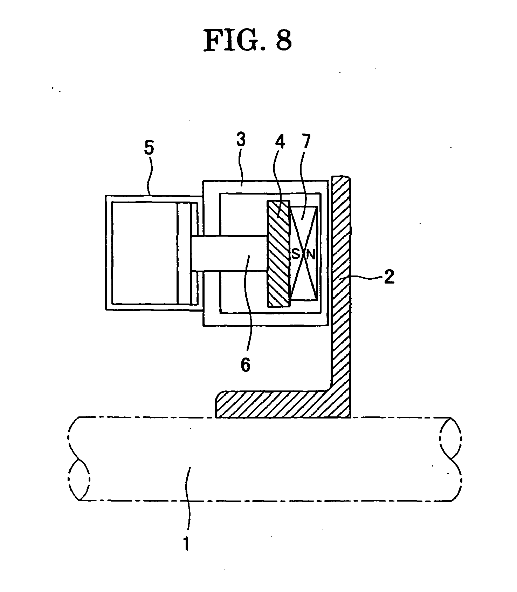

FIG. 8 is a diagram for describing the structure of the eddy current braking apparatus according to the second embodiment of the present invention. This eddy current braking apparatus comprises a brake disk 2 attached to a rotary shaft 1, and a guide sleeve 3 made of nonmagnetic material, disposed beside the brake disk 2. The guide sleeve 3 is supported by a nonrotatable section of the vehicle or the like. A support ring 4 made of ferromagnetic material which is movable forward and backward in the rotary shaft direction of the brake disk 2, that is movable towards and away from the brake disk 2, is housed inside the guide sleeve 3. In addition, cylinder(s) 5 which moves the support ring 4 forward and backward is provided in the guide sleeve 3. On the other hand, the guide sleeve 3 is made of a nonmagnetic material, without a ferromagnetic member (pole piece) being disposed on the end face of the guide sleeve which opposes the brake disk.

A plurality of permanent magnets 7 are provided around the support ring 4 in the circumferential direction on the surface which faces the brake disk 2. The magnetic pole surfaces of the magnets 7 oppose the braking surface of the brake disk 2, and the permanent magnets are arranged so that adjacent permanent magnets have opposite magnetic poles (polarity). The guide sleeve which houses the support ring 4 and the permanent magnets 7 is made of nonmagnetic material such as aluminum, stainless steel or resin. There is no particular thickness prescribed for the guide sleeve, but for the end face of the guide sleeve which opposes the permanent magnets, thinner is better, and in the second embodiment a thickness of approximately 1 mm is assumed for the end face, for example.

The cylinder(s) 5 is disposed on the outer end wall of the guide sleeve 3, as the drive mechanism for the permanent magnets. The piston rod 6 passes from the cylinder 5 completely through the outer end wall of the guide sleeve to couple with the support ring 4. By using such a construction, the action of the cylinder 5 can cause the support ring 4 to move forward and backward in the rotary shaft direction of the brake disk 2.

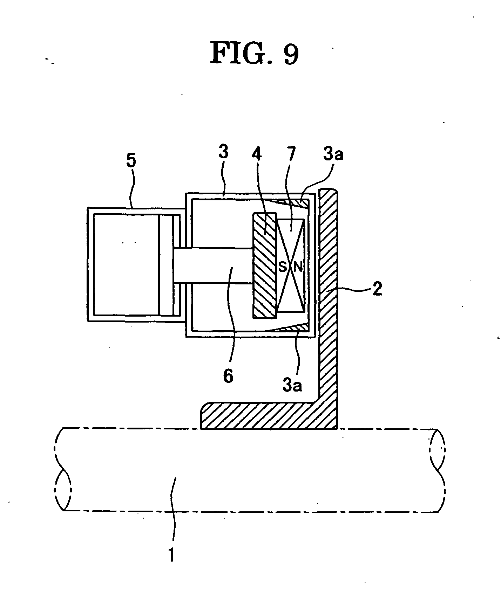

FIG. 9 shows an eddy current braking apparatus according to a third embodiment of the present invention. In order to achieve a reduction in the size and weight of the apparatus, in this embodiment the entire guide sleeve 3, not only the end face which opposes the permanent magnets 7, is made of a nonmagnetic thin walled material. For example, in embodiment 2 a thickness for the guide sleeve 3 of approximately 2 mm is assumed.

The structure of other apparatus and their effects in the third embodiment are the same as in the second embodiment. In the third embodiment, because the whole of the guide sleeve 3 is constructed from a thin walled material, a reinforcing member 3a is provided on the outer periphery of the end face of the guide sleeve 3 to maintain the strength of the whole guide sleeve 3.

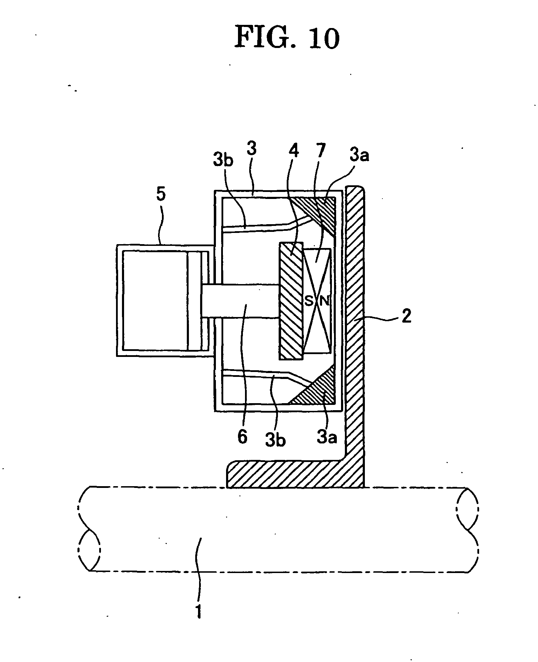

FIG. 10 shows an eddy current braking apparatus according to a fourth embodiment of the present invention. A guide tube 3b which acts as internal reinforcement and also as a guide is provided inside the guide sleeve 3, to obtain a double tube construction. By using a double tube construction for the guide sleeve in this manner, it is possible for the guide sleeve to be even thinner walled, allowing a smaller and lighter apparatus to be achieved.

In the fourth embodiment also, the reinforcing member 3a may be provided around the outer periphery of the end face of the guide sleeve 3 to maintain the strength of the whole guide sleeve 3.

With the eddy current braking apparatus according to the present invention, even if the distance between the magnets and the disk is small, rise in the permanent magnet temperature can be controlled. Furthermore, the present invention allows sufficient magnetic flux from the permanent magnets to be applied to the brake disk, improving the efficiency of brake torque generation. In other words, the present invention does not suffer a loss of magnetic efficiency during braking, and therefore does not necessarily require the use of a ferromagnetic member (pole piece). Consequently, using a simple construction, an eddy current braking apparatus can be obtained which is small and lightweight, is easily installed in a vehicle and is economically efficient.

## Claims

1. An eddy current braking apparatus comprising:
- a brake disk (2) having a braking surface and being connected to a rotary shaft (1) having an axis of rotation,
- a plurality of permanent magnets (7), and
- a drive mechanism for moving said permanent magnets (7) toward and away from said braking surface of said brake disk (2) in the direction of the rotary shaft, **characterized in that** the plurality of permanent magnets are arranged so that magnetic pole surfaces of the permanent magnets face said braking surface of said brake disk (2), whereby magnetic poles of the magnetic pole surfaces of adjacent permanent magnets (7) are opposite.

2. An eddy current braking apparatus according to claim 1, wherein said drive mechanism includes a movable support ring (4) which holds said permanent magnets (7).

3. An eddy current braking apparatus according to claim 2, further comprising a guide sleeve (3) supported by a nonrotatable structural section not connected to said rotary shaft(1), which receives said support ring (4) and is disposed facing said brake disk (2).

4. An eddy current braking apparatus according to claim 3, wherein in said guide sleeve (3), ferromagnetic members (8) are provided positioned facing said brake disk (2).

5. An eddy current braking apparatus according to claim 3, wherein a whole of said guide sleeve (3) including an end face opposed to said permanent magnets (7) is constructed of nonmagnetic material.

6. An eddy current braking apparatus according to claim 5, wherein said guide sleeve (3) is formed of aluminum, stainless steel or resin.

7. An eddy current braking apparatus according to claim 1 further comprising:
a guide sleeve (3) supported by a nonrotatable section and disposed to a side of said brake disk (2);
a support ring (4) housed inside said guide sleeve (3) and movable in the rotary shaft direction;
whereby the plurality of permanent magnets (7) are arranged opposed to said brake disk (2) around a circumferential direction of said support ring (4), and ; ferromagnetic members (8) disposed on an end face of said guide sleeve (3) so as to face said permanent magnets (7),
wherein said permanent magnets (7) are freely movable from a position near to and facing said brake disk (2), at which braking is possible, to a non-braking position away from said brake disk (2).

8. An eddy current braking apparatus according to claim 1 further comprising:
a guide sleeve (3) supported by a nonrotatable section and disposed to a side of said brake disk (2); a support ring (4) housed inside said guide sleeve (3) and movable in the rotary shaft direction of said brake disk (2);
whereby a plurality of permanent, magnets (7) are arranged opposed to said brake disk around a circumferential direction of said support ring (4),
and said permanent magnets (7) are freely movable in the rotary shaft direction of said permanent magnets (7),
wherein a whole of said guide sleeve (3) including an end face opposed to said permanent magnets (7) is constructed of nonmagnetic material.

## Patentansprüche

1. Wirbelstrom-Bremsvorrichtung mit:
- einer Bremsscheibe (2), die eine Bremsfläche aufweist und mit einer Drehwelle (1) verbunden ist, welche eine Drehachse hat,
- mehreren Permanentmagneten (7), und
- einem Antriebsmechanismus zum Bewegen der Permanentmagnete (7) in Richtung der Drehwelle auf die Bremsfläche der Bremsscheibe (2) zu und von dieser weg, **dadurch gekennzeichnet, dass** die mehreren Permanentmagnete derart angeordnet sind, dass die Magnetpolflächen der Permanentmagnete der Bremsfläche der Bremsscheibe (2) zugewandt sind, wobei die Magnetpole der Magnetpolflächen benachbarter Permanentmagnete (7) einander entgegengesetzt sind.

2. Wirbelstrom-Bremsvorrichtung nach Anspruch 1, bei welcher der Antriebsmechanismus einen bewegbaren Stützring (4) umfasst, der die Permanentmagnete (7) hält.

3. Wirbelstrom-Bremsvorrichtung nach Anspruch 2, ferner mit einer Führungsbuchse (3), welche durch einen nicht mit der Drehwelle (1) verbundenen, nicht drehbaren strukturellen Abschnitt gestützt ist, der den Stützring (4) aufnimmt und der Bremsscheibe (2) zugewandt angeordnet ist.

4. Wirbelstrom-Bremsvorrichtung nach Anspruch 3, bei der in der Führungsbuchse (3) ferromagnetische Teile (8) der Bremsscheibe (2) zugewandt angeordnet sind.

5. Wirbelstrom-Bremsvorrichtung nach Anspruch 3, bei der die gesamte Führungsbuchse (3), einschließlich einer den Permanentmagneten (7) zugewandten Endfläche, aus nicht magnetischem Material besteht.

6. Wirbelstrom-Bremsvorrichtung nach Anspruch 5, bei welcher die Führungsbuchse (3) aus Aluminium, rostfreiem Stahl oder Harz gebildet ist.

7. Wirbelstrom-Bremsvorrichtung nach Anspruch 1, ferner mit:
einer Führungsbuchse (3), die von einem nicht drehbaren Abschnitt gestützt ist und auf einer Seite der Bremsscheibe (2) angeordnet ist;
einem in der Führungsbuchse (3) aufgenommenen und in Richtung der Drehwelle bewegbaren Stützring (4), wobei die mehreren Permanentmagnete (7) der Bremsscheibe (2) gegenüberliegend in Umfangsrichtung um den Stützring (4) herum angeordnet sind, und
ferromagnetischen Elementen (8), die an einer Endfläche der Führungsbuchse (3) den Permanentmagneten (7) zugewandt angeordnet sind,
wobei die Permanentmagnete (7) aus einer der Bremsscheibe (2) nahen und dieser zugewandten Position, in der ein Bremsen möglich ist, in eine von der Bremsscheibe (2) beabstandete Nicht-Brems-Position frei bewegbar sind.

8. Wirbelstrom-Bremsvorrichtung nach Anspruch 1, ferner mit:
einer Führungsbuchse (3), die von einem nicht drehbaren Abschnitt gestützt ist und auf einer Seite der Bremsscheibe (2) angeordnet ist;
einem in der Führungsbuchse (3) aufgenommenen und in Richtung der Drehwelle der Bremsscheibe (2) bewegbaren Stützring (4),
wobei mehrere Permanentmagnete (7) der Bremsscheibe gegenüberliegend in Umfangsrichtung um den Stützring (4) herum angeordnet sind, und
wobei die Permanentmagnete (7) in der Drehwellenrichtung der Permanentmagnete (7) frei bewegbar sind,
wobei die gesamte Führungsbuchse (3), einschließlich einer den Permanentmagneten (7) gegenüberliegenden Endfläche, aus nicht magnetischem Material besteht.

## Revendications

1. Dispositif de freinage à courants de Foucault comprenant:
- une disque de frein (2) ayant une surface de freinage et étant reliée à un arbre de rotation (1) ayant un axe de rotation;
- plusieurs aimants permanent (7), et
- un mécanisme d'entraînement pour déplacer les aimants permanent (7) vers et de la surface de freinage de la disque de frein (2) selon al direction de l'arbre de rotation, **caractérisé en ce que** les plusieurs aimants permanent sont disposés de manière que les faces des pôles d'aimant des aimants permanents sont tournées vers la surface de freinage de la disque de frein (2), alors que les pôles d'aimant des faces des pôles d'aimant des aimants permanent (7) adjacents sont opposés.

2. Dispositif de freinage à courants de Foucault selon la revendication 1, dans lequel le mécanisme d'entraînement inclut un anneau de support (4) soutenant les aimants permanent (7).

3. Dispositif de freinage à courants de Foucault selon la revendication 2, comprenant en outre une douille de guidage (3) soutenue par une section structurelle non-rotative qui n'est pas reliée à l'arbre de rotation (1), ladite douille recevant l'anneau de support (4) et étant disposée tournée vers la disque de frein (2).

4. Dispositif de freinage à courants de Foucault selon la revendication 3, dans lequel des éléments ferromagnétiques (8) son prévus tournés vers la disque de frein (2).

5. Dispositif de freinage à courants de Foucault selon la revendication 3, dans lequel toute la douille de guidage (3), y compris une face d'extrémité opposée aux aimants permanent (7), est formée d'un matériau non-magnétique.

6. Dispositif de freinage à courants de Foucault selon la revendication 5, dans lequel la douille de guidage (3) est faite d'aluminium, d'acier inoxydable ou de résine.

7. Dispositif de freinage à courants de Foucault selon la revendication 1, comprenant:
une douille de guidage (3) soutenue par une section structurelle non-rotative et disposée sur une côté de la disque de frein (2);
un anneau de support (4) situé dans la douille de guidage (3) et apte à être déplacé selon la direction de l'arbre de rotation,
les plusieurs aimants permanents (7) étant arrangés vis à vis de la disque de frein (2) autour de la périphérie de l'anneau de support (4), et
des éléments ferromagnétiques (8) disposés sur une face d'extrémité de la douille de guidage (3) de manière qu'ils sont face à la disque de frein (2),
les aimants permanents (7) étant librement déplaçable à partir d'une position près de et face à ladite disque de freinage (2), où freinage est possible, vers une position de non-freinage cartée de ladite disque de freinage (2).

8. Dispositif de freinage à courants de Foucault selon la revendication 1, comprenant:
une douille de guidage (3) soutenue par une section structurelle non-rotative et disposée sur une côté de la disque de frein (2);
un anneau de support (4) situé dans la douille de guidage (3) et apte à être déplacé selon la direction de l'arbre de rotation de la disque de frein (2),
les plusieurs aimants permanents (7) étant arrangés vis à vis de la disque de frein (2) autour de la périphérie de l'anneau de support (4),
et les aimants permanent (7) étant librement déplaçable selon la direction de l'arbre de rotation des aimants permanent (7),
toute la douille de guidage (3), y compris une face d'extrémité opposée aux aimants permanent (7), étant formée d'un matériau non-magnétique.
